# EUROPÄISCHE PATENTSCHRIFT

(11) **EP 2 313 693 B1**
(45) Veröffentlichungstag und Bekanntmachung des Hinweises auf die Patenterteilung: **05.10.2016**
(21) Anmeldenummer: 09780625.1
(22) Anmeldetag: 15.07.2009
(51) Int. Cl.: F16B 7/04, F24C 15/16

(54) **SCHNELLBEFESTIGUNGSELEMENT**
QUICK-ACTION FASTENING ELEMENT
ÉLÉMENT DE FIXATION RAPIDE

(30) Priorität: 30.07.2008 DE 202008010188 U
(43) Veröffentlichungstag der Anmeldung: 27.04.2011
(73) Patentinhaber: Paul Hettich GmbH & Co. KG, 32278 Kirchlengern (DE)
(72) Erfinder: BUDDE, Sven, 32312 Lübbecke (DE)
(74) Vertreter: Dantz, Jan Henning
(86) Internationale Anmeldenummer: PCT/EP2009/059055
(87) Internationale Veröffentlichungsnummer: WO 2010/012592

(56) Entgegenhaltungen:
- WO-A-2008/070285
- DE-U1-202005 020 458

## Beschreibung

Die vorliegende Erfindung betrifft ein Schnellbefestigungselement zur Befestigung einer Schiene einer Ausziehführung an einer horizontalen Stange eines gitterartigen Seitenteils, insbesondere für Backöfen, nach dem Oberbegriff des Anspruches 1.

Die DE 20 2006 002 251 offenbart eine Schnellbefestigungsvorrichtung zur Festlegung einer Schiene einer Ausziehführung an einem gitterartigen Seitenteil, wobei klammerartige Halteabschnitte vorgesehen sind, die eine Stange zumindest teilweise umgreifen. Zur Festlegung der Schnellbefestigungsvorrichtung ist ein Rastelement vorgesehen, das eine horizontale Stange des Seitenteils hintergreift, damit die Ausziehführung an der Stange festgelegt werden kann. Für eine Demontage kann das Rastelement dabei manuell verbogen werden, um bei Bedarf die Schnellbefestigungsvorrichtung zu demontieren. Dies kann manuell durch den Benutzer erfolgen, was den Nachteil hat, dass auch eine Fehlbetätigung möglich ist. Zudem besteht ein Verletzungsrisiko aufgrund des kantigen Rastelementes.

Auch die DE 20 2005 020 458 offenbart ein Schnellbefestigungselement zur Festlegung einer Schiene einer Ausziehführung an einer Strebe eines Seitenteils, wobei ein Verrasten an dem gitterartigen Seitenteil erfolgt. Das Schnellbefestigungselement umfasst Rastmittel, die eine Federzunge besitzen, die manuell vom Benutzer verbogen werden können. Auch hier ergeben sich Probleme, wenn der Benutzer die Rastelemente nicht sachgemäß handhabt.

Es ist daher Aufgabe der vorliegenden Erfindung ein Schnellbefestigungselement zu schaffen, das eine sichere Befestigung an einer Strebe eines Seitenteils schafft und gegen Fehlbedienungen weitgehend geschützt ist.

Diese Aufgabe wird mit einem Schnellbefestigungselement mit den Merkmalen des Anspruches 1 gelöst.

Erfindungsgemäß umfasst das Schnellbefestigungselement ein Rastelement, das als biegesteife Erhebung ausgebildet ist, die integral mit der ersten oder zweiten Klammer ausgebildet ist. Dadurch wird vermieden, dass das Rastelement leichtgängig verschwenkt werden kann, was den Benutzer veranlassen könnte, an dem Rastelement manuell anzugreifen, um eine Demontage oder Montage vorzunehmen. Dies soll vermieden werden, da das Rastelement zwar bei Einsatz eines Werkzeuges lösbar ist, allerdings durch eine biegesteife Ausbildung eine versehentliche manuelle Betätigung sicher verhindert wird.

Gemäß einer bevorzugten Ausgestaltung der Erfindung ist die Erhebung des Rastelementes an einem bandförmigen Abschnitt ausgebildet, wobei beide Seiten des bandförmigen Abschnittes mit der Klammer verbunden sind. Es fehlt somit an einem freistehenden Endabschnitt, der leichtgängig verschwenkbar ist. Vielmehr muss die Elastizität des Materials genutzt werden, um die Erhebung beim Einrasten des Schnellbefestigungselementes zu bewegen. Die Kräfte zum Bewegen des bandförmigen Rastelementes sind jedoch um ein Vielfaches größer als die Kräfte bei dem frei verschwenkbaren Endabschnitt eines vorbekannten Rastelementes.

Gemäß einer weiteren Ausgestaltung der Erfindung ist das Rastelement über eine allseitig von dem Material der Klammer umgebenen Aussparung von dem übrigen Teil der Klammer beabstandet. Dadurch wird eine bandförmige Kontur erreicht, die zwar an sich elastisch ist, aber vergleichsweise biegesteif ausgebildet ist. Um die stegförmige Anbindung des Rastelementes zu verlängern, besitzt die Aussparung vorzugsweise eine U-förmige Kontur, so dass als verschwenkbarer Hebel ein L-förmiges Stegprofil vorgesehen ist.

Die Erhebung des Rastelementes erstreckt sich vorzugsweise bis zu einem mittleren Bereich der Stange, also etwa bis zur Höhe einer mittleren Längsachse der Stange. In diesem Bereich hat die Stange bei einer kreisförmigen Kontur die größte Breite, so dass eine im Wesentlichen formschlüssige Aufnahme an dem Schnellbefestigungselement realisiert werden kann.

Gemäß einer weiteren Ausgestaltung der Erfindung erstreckt sich die Erhebung des Rastelementes über die gesamte Breite des Rastelementes senkrecht zur Längsrichtung der Stange und ist dabei schräg zur Horizontalen angeordnet. Dabei kann die Erhebung des Rastelementes benachbart zu der Stange am größten sein, so dass beim Aufschieben des Schnellbefestigungselementes eine Anlaufschräge vorhanden ist, die eine leichte Montage ermöglicht.

Das Rastelement ist vorzugsweise an einem Wandabschnitt der ersten Klammer angeformt, so dass ein Abziehen des Schnellbefestigungselementes in eine Richtung parallel zu dem abgebogenen Endabschnitt der Stange vermieden wird.

Die Erfindung wird nachfolgend anhand eines Ausführungsbeispieles mit Bezug auf die beigefügten Zeichnungen näher erläutert. Es zeigen:
- Figur 1: eine perspektivische Ansicht eines Innenraums eines Haushaltsgerätes mit Schnellbefestigungselement im montierten Zustand;

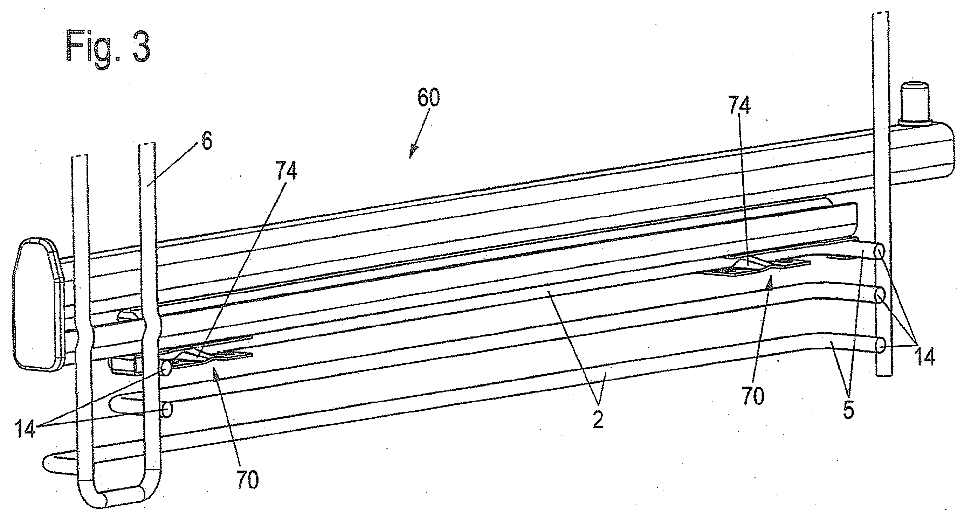

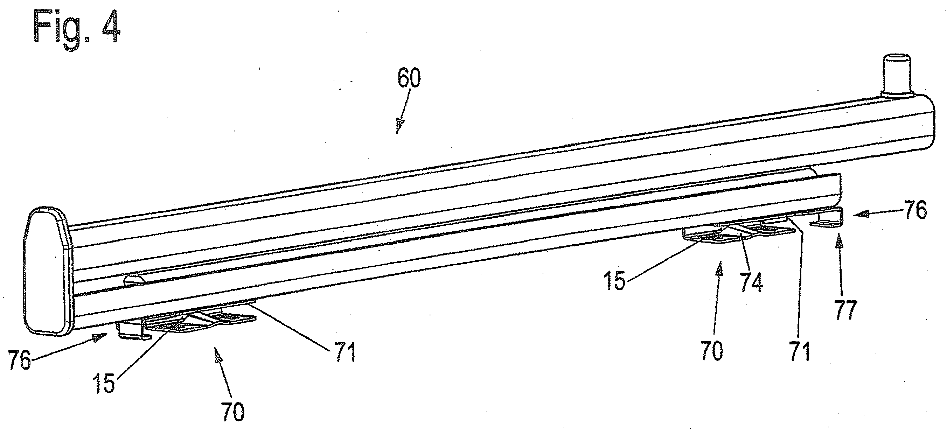

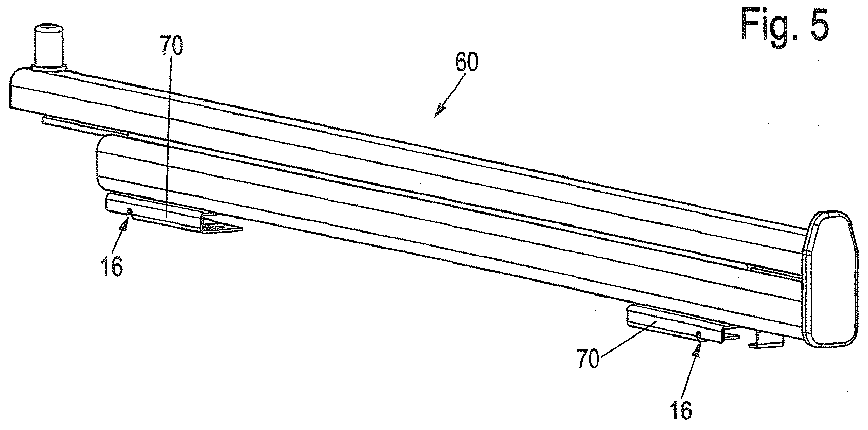

- Figuren 2 bis 5: mehrere perspektivische Ansichten eines an einer Schiene einer Ausziehführung montierten Schnellbefestigungselementes, und
- Figuren 6 bis 8: mehrere perspektivische Ansichten des Schnellbefestigungselementes.

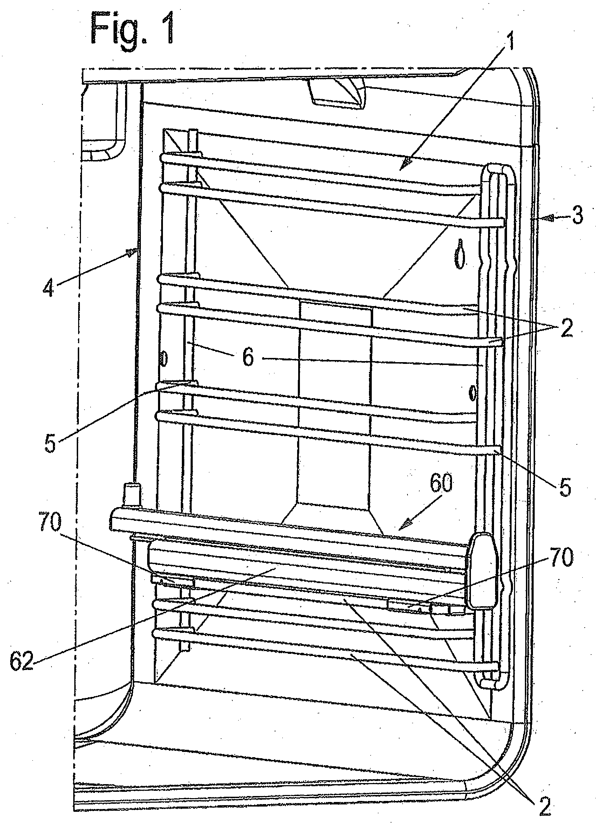

In Figur 1 ist ein Innenraum 1 eines Backofens gezeigt, bei dem an gegenüberliegenden Seiten ein gitterartiges Seitenteil 4 vorgesehen ist. Das gitterartige Seitenteil 4 erstreckt sich von einer Vorderseite 3 des Backofens bis zu einer Rückseite und weist eine Vielzahl horizontaler Stangen 2 auf. Die horizontalen Stangen 2 verlaufen von der Vorderseite 3 zu einer Rückseite und weisen einen im Wesentlichen rechtwinklig abgebogenen Endabschnitt 5 auf. Die Stangen 2 sind an dem abgewinkelten Endabschnitt 5 benachbart zu einer Stirnseite 14 an Pfosten 6 des gitterartigen Seitenteils 4 festgelegt.

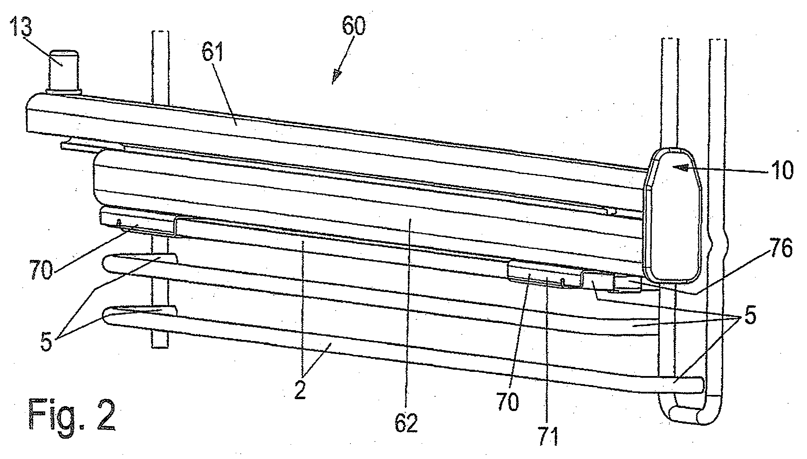

An einer horizontalen Stange 2 ist eine Ausziehführung 60 montiert, die eine Schiene 62 umfasst, die über ein Schnellbefestigungselement 70 an einer horizontalen Stange 2 festgelegt ist (Fig. 2). Eine Laufschiene 61 der Ausziehführung 60 umfasst dabei eine Auflagefläche zum Auflegen eines Gargutträgers, wobei ein hervorstehender Bolzen 13 als Anschlag dient und zur Vorderseite hin eine Abdeckkappe 10 vorgesehen ist.

Das Schnellbefestigungselement 70 umfasst eine erste Klammer 71, die einen Abschnitt der Stange 2 in Längsrichtung U-förmig umgreift. Ferner ist eine zweite Klammer 76 vorgesehen, die im Querschnitt ebenfalls U-förmig ausgebildet ist und einen abgebogenen Endabschnitt 5 umgreift.

Zur Festlegung des Schnellbefestigungselementes an der Stange 2 ist ferner ein Rastelelement 74 vorgesehen, das integral mit einem Wandabschnitt der ersten Klammer 71 ausgebildet ist und durch eine Erhebung gebildet ist.

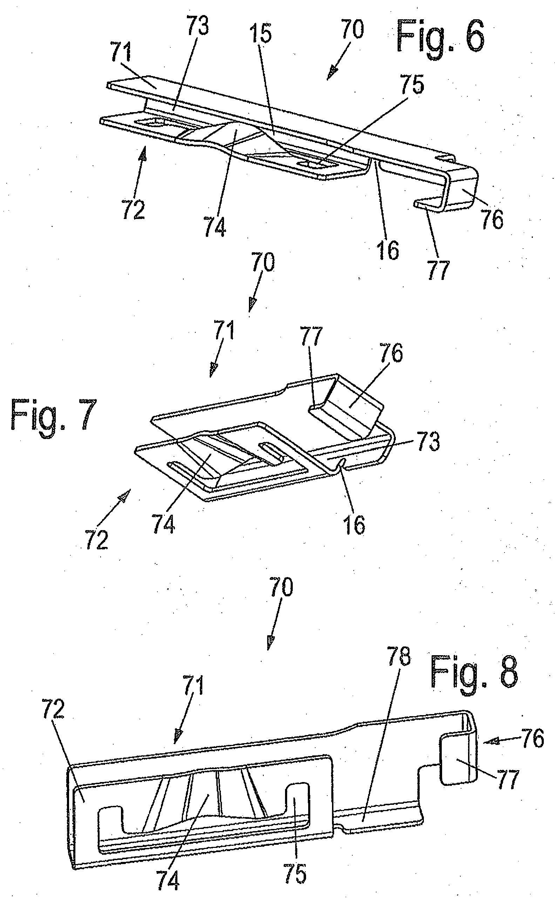

Wie in den Figuren 6 bis 8 gezeigt ist, ist die Erhebung 74 an einem bandförmigen Abschnitt gebildet, der sich parallel zur Längsrichtung der Stange 2 erstreckt und von dem übrigen Teil der Klammer 71 durch eine Aussparung 75 beabstandet ist, die U-förmig ausgebildet ist. Zwischen der Erhebung und einem Bodenabschnitt 73 der Klammer 71 ist eine Aufnahme 15 für die Stange 2 gebildet. Die Erhebung 74 ist zur Horizontalen geneigt, wobei der höchste Punkt der Erhebung benachbart zu der Stange 2 angeordnet ist. Durch die schräge Ausbildung der Erhebung 74 bildet diese eine Einführschräge, so dass beim Aufschieben des Schnellbefestigungselementes 70 mit der Ausziehführung 60 ein Einrasten erfolgt. Als Hebelweg dient dabei der Bereich zwischen der Erhebung 74 und jeweils ein L-förmiger Abschnitt 72, der sich im Wesentlichen bis zu dem Bodenabschnitt 73 erstreckt. Der Bodenabschnitt 73 ist von der zweiten Klammer 76 über eine Aussparung 16 getrennt, die als Schlitz ausgebildet ist, damit die beiden L-förmigen Abschnitte 72 elastisch biegbar sind.

Benachbart zu der ersten Klammer 71 ist noch ein plattenförmiger Befestigungsabschnitt 78 vorgesehen, er dient zur optionalen seitlichen Festlegung an der Ausziehführung 60. Die Anbringung des Schnellbefestigungselementes 70 kann somit unter oder seitlich an der Ausziehführung 60 erfolgen.

Die zweite Klammer 76 umfasst einen Steg 77, der den abgebogenen Endabschnitt 5 umgreift. Die zweite Klammer 76 ist ohne Rastelement ausgebildet. Es ist allerdings möglich ein Rastelement alternativ oder zusätzlich an der zweiten Klammer 76 vorzusehen.

### Bezugszeichenliste

- 1: Innenraum
- 2: Stangen
- 3: Vorderseite
- 4: Gitterartiges Seitenteil
- 5: Abgebogener Endabschnitt
- 6: Pfosten
- 10: Abdeckkappe
- 13: Bolzen
- 14: Stirnseite
- 15: Aufnahme
- 16: Aussparung
- 60: Ausziehführung
- 61: Laufschiene
- 62: Schiene
- 70: Schnellbefestigungselement
- 71: Erste Klammer
- 72: L-formiger Abschnitt
- 73: Bodenabschnitt
- 74: Erhebung
- 75: Aussparung
- 76: Zweite Klammer
- 77: Steg
- 78: Befestigungsabschnitt

## Patentansprüche

1. Schnellbefestigungselement (70) zur Befestigung einer Schiene (62) einer Ausziehführung (60) an einer horizontalen Stange (2) eines gitterartigen Seitenteils (4), insbesondere für Backöfen, wobei die Stange (2) einen zu einer Längsrichtung winklig abgebogenen Endabschnitt (5) aufweist und das Schnellbefestigungselement (70) eine erste Klammer (71), die einen in Längsrichtung angeordneten Abschnitt der Stange (2) zumindest teilweise umgreift, und eine zweite Klammer (76), die den abgebogenen Endabschnitt (5) zumindest teilweise umgreift, aufweist, wobei ein Rastelement (74) vorgesehen ist, das die Stange (2) hintergreift und ein Abziehen des Schnellbefestigungselementes (70) in eine Richtung parallel zu dem abgebogenen Endabschnitt (5) verhindert, **dadurch gekennzeichnet, dass** das Rastelement (74) als biegesteife Erhebung ausgebildet ist, die integral mit der ersten oder zweiten Klammer (71, 76) an einem bandförmigen Abschnitt ausgebildet ist und beide Seiten des bandförmigen Abschnittes mit der Klammer (71, 76) verbunden sind.

2. Schnellbefestigungselement nach Anspruch 1, **dadurch gekennzeichnet, dass** das Rastelement (74) über eine allseitig von Material der Klammer (71, 76) umgebenen Aussparung (75) von dem übrigen Teil der Klammer (71, 76) beabstandet ist.

3. Schnellbefestigungselement nach Anspruch 2, **dadurch gekennzeichnet, dass** die Aussparung (75) U-förmig ausgebildet ist.

4. Schnellbefestigungselement nach einem der Ansprüche 1 bis 3, **dadurch gekennzeichnet, dass** die Erhebung des Rastelementes (74) sich bis zu einem mittleren Bereich der Stange (2) erstreckt.

5. Schnellbefestigungselement nach einem der Ansprüche 1 bis 4, **dadurch gekennzeichnet, dass** sich die Erhebung des Rastelementes (74) über die gesamte Breite des Rastelementes senkrecht zur Längsrichtung der Stange (2) erstreckt und schräg zur Horizontalen angeordnet ist.

6. Schnellbefestigungselement nach Anspruch 5, **dadurch gekennzeichnet, dass** die Erhebung des Rastelementes (74) benachbart zu der Stange (2) am größten ist.

7. Schnellbefestigungselement nach einem der Ansprüche 1 bis 6, **dadurch gekennzeichnet, dass** das Rastelement (74) an einem Wandabschnitt der ersten Klammer (71) ausgeformt ist.

8. Schnellbefestigungselement nach einem der vorherigen Ansprüche, **dadurch gekennzeichnet, dass** das Schnellbefestigungselement einstückig aus Metall hergestellt ist.

## Claims

1. Quick-action fastening element (70) for fastening a rail (62) of a pullout guide (60) on a horizontal rod (2) of a latticed side part (4), in particular for ovens, wherein the rod (2) has an end section (5) bent over at an angle to a longitudinal direction and the quick-action fastening element (70) has a first clamp (71), which at least partially encompasses a section of the rod (2) arranged in the longitudinal direction, and a second clamp (76), which at least partially encompasses the bent-over end section (5), wherein a latching element (74) is provided, which engages behind the rod (2) and prevents the quick-action fastening element (72) from being withdrawn in a direction parallel to the bent-over end section (5), **characterized in that** the latching element (74) is implemented as a bend-proof protrusion, which is integrally formed with the first or second clamp (71, 76) on a strip-shaped section and both sides of the strip-shaped section are connected to the clamp (71, 76).

2. Quick-action fastening element according to claim 1, **characterized in that** the latching element (74) is spaced apart from the remaining part of the clamp (71, 76) by a recess (75) enclosed on all sides by material of the clamp (71, 76).

3. Quick-action fastening element according to claim 2, **characterized in that** the recess (75) is U-shaped.

4. Quick-action fastening element according to one of the claims 1 to 3, **characterized in that** the protrusion of the latching element (74) extends up to a middle area of the rod (2).

5. Quick-action fastening element according to one of the claims 1 to 4, **characterized in that** the protrusion of the latching element (74) extends over the entire width of the latching element perpendicularly to the longitudinal direction of the rod (2) and is arranged diagonally to the horizontal.

6. Quick-action fastening element according to claim 5, **characterized in that** the protrusion of the latching element (74) is largest adjacent to the rod (2).

7. Quick-action fastening element according to one of the claims 1 to 6, **characterized in that** the latching element (74) is shaped on a wall section of the first clamp (71).

8. Quick-action fastening element according to one of the preceding claims, **characterized in that** the quick-action fastening element is produced from metal in one piece.

## Revendications

1. Elément de fixation rapide (70) pour permettre de fixer un rail (62) d'un guidage de déploiement télescopique (60) sur une barre horizontale (2) d'une partie latérale (4) en forme de grille, en particulier pour des fours, la barre (2) comprenant un segment d'extrémité (5) replié angulairement par rapport à la direction longitudinale et l'élément de fixation rapide (70) comprennent une première pince (71) qui entoure au moins partiellement un segment de la barre (2) situé en direction longitudinale et une seconde pince (76) qui entoure au moins partiellement le segment d'extrémité replié (5), et il est prévu un élément d'encliquetage (74) qui s'engage derrière la barre (2) et empêche le retrait de l'élément de fixation rapide (70) dans une direction parallèle au segment d'extrémité replié (5),
**caractérisé en ce que**
l'élément d'encliquetage (74) est réalisé sous la forme d'un bossage résistant à la flexion qui est réalisé intégralement avec la première ou la seconde pince (71, 76) sur un segment en forme de bande, et les deux côtés du segment en forme de bande sont reliés à la pince (71, 76).

2. Elément de fixation rapide conforme à la revendication 2,
**caractérisé en ce que**
l'élément d'encliquetage (74) est écarté des autres parties de la pince (71, 76) par un évidement (75) entouré de tous côtés du matériau de la pince (71, 76).

3. Elément de fixation rapide conforme à la revendication 2,
**caractérisé en ce que**
l'évidement (75) est en forme de U.

4. Elément de fixation rapide conforme à l'une des revendications 1 à 3,
**caractérisé en ce que**
le bossage de l'élément d'encliquetage (74) s'étend jusqu'à la zone médiane de la barre (2).

5. Elément de fixation rapide conforme à l'une des revendications 1 à 4,
**caractérisé en ce que**
le bossage de l'élément d'encliquetage (74) s'étend sur la totalité de la largueur de cet élément perpendiculairement à la direction longitudinale de la barre (2) et est orienté obliquement par rapport à l'horizontale.

6. Elément de fixation rapide conforme à la revendication 5,
**caractérisé en ce que**
le bossage de l'élément d'encliquetage (74) est le plus grand au voisinage de la tige (2).

7. Elément de fixation rapide conforme à l'une des revendications 1 à 6,
**caractérisé en ce que**
l'élément d'encliquetage (74) est formé sur un segment de paroi de la première pince (71).

8. Elément de fixation rapide conforme à l'une des revendications précédentes 1,
**caractérisé en ce qu'**
il est réalisé une seule pièce en métal.
